# EUROPÄISCHE PATENTSCHRIFT

(11) **EP 2 399 982 B1**
(45) Veröffentlichungstag und Bekanntmachung des Hinweises auf die Patenterteilung: **10.10.2018**
(21) Anmeldenummer: 10167349.9
(22) Anmeldetag: 25.06.2010
(51) Int. Cl.: C12C 5/00, C12C 7/053, C12C 12/00, C12G 3/02, C12C 12/02, C12C 7/04

(54) **Verfahren zu Herstellung eines Getränks aus Buchweizen**
Method for producing a drink from buckwheat
Procédé de fabrication d'une boisson constituée de sarrasin

(43) Veröffentlichungstag der Anmeldung: 28.12.2011
(73) Patentinhaber: Stadtbrauerei Spalt, 91174 Spalt (DE)
(72) Erfinder: Schulz, Uwe, 91785 Pleinfeld (DE); Lindemann, Bernd Prof. Dr., 65366 Geisenheim (DE); Zürcher, Christian Dr., 60599 Frankfurt (DE); Weingart, Udo, 91174 Spalt (DE)
(74) Vertreter: Weickmann & Weickmann PartmbB

(56) Entgegenhaltungen:
- EP-A1- 0 949 329
- CN-A- 1 331 280
- CZ-U1- 20 730
- FR-A1- 2 707 996
- FR-A5- 2 036 473
- GB-A- 1 184 032
- RU-C1- 2 211 859

## Beschreibung

Die Erfindung betrifft ein Verfahren zur Herstellung eines Getränks aus Buchweizen.

Buchweizen, auch echter Buchweizen, gemeiner Buchweizen oder Fagopyrum esculentum genannt, ist ein Pseudogetreide. Buchweizen bildet stärkehaltige Körnerfrüchte mit ernährungsphysiologisch wichtigen Eigenschaften. So ist die Buchweizenfrucht glutenfrei und enthält Rutin, ein Glucosid des Quercetins mit starker antioxidativer Wirkung.

Buchweizen wurde im 19. Jahrhundert in beachtlicher Größenordnung angebaut. Der zu Mehl verarbeitete Samen wurde überwiegend zur Herstellung von verschiedenen Breigerichten verwendet. Buchweizen erlebt eine Renaissance seit der Biowelle und dem Bemühen, den allein in Deutschland über eine Million Zöliakie-gefährdeten Menschen glutenfreie Nahrungsmittel anzubieten. Seit der Entdeckung des Rutins als wichtigem Inhaltsstoff des Buchweizens gilt er auch als Heil- und Arzneipflanze. Man schreibt Buchweizen insbesondere antihämorrhagische, antioxidative, blutzuckersenkende, entzündungshemmende, gefäßstärkende, gefäßverbessernde, ödemprotektive und schleimlösende Heilwirkungen zu. Hauptanwendungen sind dabei chronisch venöse Insuffizienz, Venenschwäche sowie der Einsatz als Diätnahrung für Zöliakie-Kranke.

Es wurden auch verschiedene Versuche unternommen, glutenfreie Getränke, beispielsweise glutenfreies Bier, unter Mitverwendung von Buchweizen für Zöliakie-Kranke herzustellen. Da Buchweizen aber technisch schwierig zu verarbeiten und ein annehmbarer Geschmack schwierig einzustellen ist, hat bisher keines der entwickelten Biere Marktreife erlangt.

EP 0949329 A1 beschreibt ein Verfahren zur Herstellung von glutenfreiem Bier, wobei glutenfreies Getreide, z.B Buchweizen, verwendet wird. Enzyme wie alpha-Amylase und Glucanase müssen zur Hydrolyse der Stärke zugegeben werden.

Eine Aufgabe der vorliegenden Erfindung war deshalb die Entwicklung eines Verfahrens zur Herstellung eines Getränks aus Buchweizenmalz und insbesondere aus 100 % Buchweizenmalz.

Diese Aufgabe wird erfindungsgemäß gelöst durch ein Verfahren zur Herstellung eines Getränks aus Buchweizen, umfassend die Schritte (i) Bereitstellen von Buchweizenmalz, (ii) Maischen des Buchweizenmalzes, wobei ein enzymatisch-thermischer Stärkeaufschluss oder/und ein thermischer Stärkeaufschluss in einem Autoklav durchgeführt wird, gemäß Anspruch 1.

Die Erfindung betrifft insbesondere ein Verfahren zur Herstellung eines dauerhaft trüben Getränks aus 100 % Buchweizenmalz mit niedrigem Alkoholgehalt.

Erfindungsgemäß wurde festgestellt, dass dem Aufschluss der Buchweizenstärke eine wesentliche Bedeutung bei der Bereitstellung eines Buchweizengetränkes zukommt. Dabei müssen die sehr kleinzelligen Stärkekörner des Buchweizens aufgelöst werden. Es wurde nun festgestellt, dass eine Verzuckerung der Stärke, wenn die Schüttung ausschließlich oder fast auschließlich aus Buchweizenmalz besteht, nur durch Zugabe technischer Enzyme erreicht werden kann.

Erfindungsgemäß wird deshalb in einer ersten Ausführungsform eine Maischung von Buchweizenmalz unter Zugabe von Enzymen durchgeführt. Im Gegensatz zur Herstellung von herkömmlichen Bier, bei der nur die im Gerstenmalz selbst entwickelten Enzyme zum Einsatz kommen, müssen erfindungsgemäß zusätzlich externe Enzyme zugegeben werden, weil Buchweizenmalz kaum α- und ß-Amylaseaktivitäten besitzt. Dabei sind Enzyme geeignet, die sowohl 1,4-α-D- als auch 1,6-α-D-glycosidische Bindungen, insbesondere der Dextrine und des Amylopektins, spalten. Erfindungsgemäß werden also enzymatisch die äußeren Schichten des Stärkekorns mittels zusätzlich zugegebener Enzyme gespalten. Vorzugsweise wird dieser Aufschluss noch thermisch unterstützt, z.B. durch Behandlung bei Temperaturen von 80 °C bis zum Kochen (100 °C), insbesondere von 95 °C bis zum Kochen (100 °C).

Bei der Maischung wird gemäß einer ersten Ausführungsform eine technische Glucoamylase zugegeben, die als Exo-Enzym in der Hauptsache 1,4-α-D-glucosidische Bindungen hydrolysiert, aber auch 1,6-α-D-glycosidische Bindungen des Amylopektins spaltet. Dabei entstehen neben kleineren Mengen Glucose vor allem Grenzdextrine und Oligosaccharide.

Die Menge an 1,4-α-D-glucosidische und 1,6-α-D-glycosidische Bindungen spaltenden Glucoamylase beträgt vorzugsweise 0,01 bis 0,1 kg, mehr bevorzugt 0,03 bis 0,05 kg Enzym pro 100 kg Buchweizenmalz.

Gemäß einer weiteren Ausführungsform der Erfindung ist es auch möglich, die kleinzelligen Stärkekörner des Buchweizens beim Maischen zunächst mit einer a+ß- Amylase anzugreifen, um sie dann mittels eines thermischen Aufschlusses vollständig aufzulösen. Dies geschieht bei Temperaturen von 105 bis 130 °C, noch mehr bevorzugt 105 bis 115 °C und einem entsprechenden Überdruck von 0,4 bis 0,9 barü.

Um beim Maischen eine vollständige Verzuckerung der Stärke sicherzustellen, wird erfindungsgemäß bevorzugt weiterhin eine α-Amylase zugesetzt. Die Menge an zugesetzter α-Amylase beträgt vorzugsweise 0,01 bis 0,1 kg pro 100 kg des eingesetzten Buchweizenmalzes. In einer bevorzugten Ausführungsform wird die Amylase in wenigstens zwei Portionen zugegeben.

In einem ersten Schritt wird erfindungsgemäß zunächst Buchweizenmalz bereitgestellt. Dazu wird Buchweizen einem Mälzungsverfahren unterzogen, Bevorzugt wird beim Mälzungsverfahren ein Buchweizenmalz hergestellt, das erfahrungsgemäß nur sehr geringe α- und ß-Amylaseaktivitäten besitzt, so dass beim Maischprozess nur wenig vergärbare Zucker gebildet werden. Für eine hohe Extraktausbeute sollte aber in jedem Fall ein Buchweizenmalz eingesetzt werden, welches eine gute zytolytische Lösung besitzt.

Das bereitgestellte Buchweizenmalz wird anschließend erfindungsgemäß einem Maischverfahren oder Maischen unterworfen. Erfindungsgemäß wird dabei zum Maischen ein Malz eingesetzt, welches >= 99 Gew.-% aus Buchweizen besteht. Besonders bevorzugt wird reines Buchweizenmalz, bestehend zu 100 % aus Buchweizen, eingesetzt. Es wurde festgestellt, dass mit dem erfindungsgemäßen Verfahren ein Buchweizengetränk erhalten werden kann, ohne dass der Zusatz von weiteren Getreidesorten oder Pseudogetreidesorten erforderlich ist. Erfindungsgemäß kann somit ein glutenfreies Getränk hergestellt werden.

Da der Buchweizenmehlkörper von einer dünnen Schale umhüllt ist, wird das Buchweizenmalz bevorzugt vor der Weiterverarbeitung im Maischverfahren fein geschrotet. Das Schroten kann beispielsweise in einer Zweiwalzenmühle oder in einer Dispersionsmühle durchgeführt werden, vorzugsweise mit einem Mahlspalt von kleiner 0,5 mm. Durch das Schroten wird die Schale des Buchweizenkerns zerkleinert, wodurch extreme Läuterschwierigkeiten vermieden werden.

Im Weiteren wird dann das hierin ausführlich beschriebene Maischverfahren des Buchweizenmalzes, welches ein wesentlicher Verfahrensschritt der erfindungsgemäßen Herstellung eines Buchweizengetränkes ist, durchgeführt.

Beim Maischen wird dabei vorzugsweise das Buchweizenmalz, insbesondere Buchweizenmalzschrot, zunächst mit Wasser versetzt. Beispielsweise werden ca. 100 kg Buchweizenmalz mit etwa 3,2 bis 4,2 hl Wasser vermischt. Die Einmaischtemperatur wird dabei vorzugsweise auf 40 bis 60 °C, insbesondere auf 45 bis 55 °C eingestellt. Dem Einmaischwasser oder später in die Maische werden, falls die cytolytische Lösung des Malzes unzureichend sein sollte, eine Pentosanase und/oder eine β-Glucanase, insbesondere eine thermotolerante Pentosanase und/oder eine thermotolerante β-Glucanase, zugegeben. Die Zugabe erfolgt vorzugsweise bei Temperaturen von kleiner 75 °C. Eine geeignete Menge an Pentosanase und β-Glucanase sind beispielsweise jeweils 5 bis 50 ml, vorzugsweise 15 bis 25 ml pro 100 kg Malz, insbesondere pro 100 kg Buchweizenmalz.

Weiterhin kann dem Einmaischwasser oder später zur Maische eine Proteinase zugegeben werden. Die Zugabe einer Proteinase erfolgt vorzugsweise bei Temperaturen von kleiner 65 °C. Die Menge an zugegebener Proteinase beträgt vorzugsweise 15 bis 30 ml pro 100 kg Buchweizenmalz. Eine Zugabe von Proteinase empfiehlt sich aber nur dann, wenn die proteolytische Aktivität des Malzes bzw. der Malzlösung selbst nicht ausreichend ist und Gärschwierigkeiten durch einen Mangel an FAN auftreten können.

Dem Hauptguss werden für einen enzymatisch-thermischen Stärkeaufschluss dann 0,01 bis 0,1 kg, insbesondere 0,03 bis 0,05 kg einer Glucoamylase pro 100 kg Malz zugegeben, die sowohl eine Exo-1,4-α-D-Glucosidase enthält, als auch die 1,6-α-D-glycosidischen Bindungen des Amylopektins spaltet.

Der aus Malz, Wasser, Enzym und gegebenenfalls Proteinase, Pentosanase und/oder β-Glucanase gebildete Hauptguss wird vorzugsweise zunächst einer Rast bei der Einmaischtemperatur für 15 bis 45 Minuten unterworfen, vorzugsweise 30 Minuten. Während der Rast können beispielsweise im Malz vorhandene Eiweißstoffe abgebaut werden.

Anschließend erfolgt ein Aufheizen der Maische, beispielsweise auf eine Temperatur zwischen 60 und 70 °C, bevorzugt zwischen 62 und 65 °C. Die Malzlösung wird bei dieser Temperatur für ca. 10 bis 45 Minuten gehalten, vorzugsweise 30 Minuten.

Im Weiteren erfolgt ein Aufheizen auf eine Temperatur zwischen 70 und 78 °C. Während dieses Aufheizens wird bei einer Temperatur im Bereich von 69 °C bis 70 °C vorzugsweise eine α-Amylase zugegeben. Die Menge an zugegebener α-Amylase beträgt vorzugsweise 0,01 bis 0,1 kg, mehr bevorzugt 0,03 bis 0,05 kg α-Amylase pro 100 kg Malz, insbesondere pro 100 kg Buchweizenmalz. Bei 69 bis 70 °C entwickelt sich eine Verkleisterung der Stärke.

Im Anschluss daran wird eine Rast von 10 bis 45 Minuten bei 72-82°C, insbesondere 20 bis 30 Minuten bei 76-78°C bis zur vollständigen Verflüssigung der Maische eingelegt.

Danach wird die Maische bis auf die Temperatur der thermischen Behandlung, insbesondere auf eine Temperatur von 80 °C bis zum Kochen (100 °C), insbesondere bis zum Kochen aufgeheizt und bei dieser Temperatur für mindestens 15 Minuten, mehr bevorzugt mindestens 20 Minuten gehalten.

Im Anschluss daran erfolgt ein Abkühlen der Maische bis zum Temperaturoptimum der eingesetzten α-Amylase. Zu diesem Zeitpunkt erfolgt vorzugsweise eine zweite Dosage von α-Amylase, insbesondere in einer Menge von 0,01 bis 0,1 kg pro 100 kg Malz Buchweizenmalz. Vorzugsweise wird bei der Optimaltemperatur der eingesetzten α-Amylase eine Rast bis zur vollständigen Verzuckerung (Jodnormalität) der Maische eingelegt. Anschließend kann das Abmaischen erfolgen, beispielsweise bei 0 bis 5 °C über der Verzuckerungstemperatur.

Für einen thermischen Stärkeaufschluss werden die gleichen bevorzugten Schritte wie oben für den enzymatisch-thermischen Stärkeaufschluss durchgeführt. Lediglich die Enzymzugabe ändert sich, anstelle der Glucoamylase wird eine α + ß-Amylase eingesetzt. Zudem wird der Kochschritt bei einer Temperatur größer 100 °C, insbesondere bei einer Temperatur von 105 bis 130 °C, mehr bevorzugt bei einer Temperatur von 105 bis 115 °C und einem entsprechenden Überdruck von 0,4 bis 0,9 barü durchgeführt.

Erfindungsgemäß bevorzugt wird ein Getränk aus Buchweizen mit einem geringen Alkoholgehalt, insbesondere mit einem Alkoholgehalt von 2 bis 3 Vol.-%, hergestellt. Es ist aber auch möglich, ein Buchweizengetränk mit einem höheren Alkoholgehalt, beispielsweise von 3 bis 7, insbesondere von 3 bis 5 Vol.-% herzustellen. Ein höherer Alkoholgehalt kann beispielsweise auf einfache Weise dadurch erhalten werden, dass beim Maischen anstelle einer reinen α-Amylase ein Enzymgemisch aus α- und β-Amylase eingesetzt wird. Die α-Amylase oder das α- und β-Amylasegemisch kann auch bereits beim Einmaischen dem Hauptguss zugegeben werden. Nach dem Kochen erfolgt die Zugabe vorzugsweise nach Abkühlung auf eine Temperatur im Bereich von 65 bis 70 °C.

Bei der hierin beschriebenen Vorgehensweise ist eine vollständige Verzuckerung der Stärke möglich, wobei ein hoher Anteil an nicht-vergärbaren Oligosacchariden und Dextrinen gebildet wird. Dadurch kann letztendlich ein Getränk mit geringem Alkoholgehalt trotz vollständiger Verzuckerung der Stärke erhalten werden.

Die Weiterverarbeitung nach dem Maischen zur Herstellung eines Buchweizengetränks erfolgt vorzugsweise analog den Vorgehensweisen bei einer herkömmlichen Bierherstellung. Die Würzegewinnung und das Aussüßen der Treber in einem Läuterbottich ist allerdings verfahrensbedingt nicht möglich, da das Buchweizenmalz fein geschrotet werden muss. Hier können alternative technische Vorrichtungen, wie beispielsweise ein Maischefilter, eine Hydropresse, eine Hydraulikpresse oder ein Dekanter eingesetzt werden.

Erfindungsgemäß können bei einem gut funktionierenden Läutersystem Extraktausbeuten von größer 72 % erzielt werden. Dies entspricht bei einer Schüttung von 100 kg Buchweizenmalz und einem Extraktgehalt von >= 11,0 G-G% einem Ausschlagwürzevolumen von mindestens 6,5 bis 7,0 hl.

Die Buchweizenmalzwürze kann schließlich einem Kochverfahren mit oder ohne Hopfen, welches praktisch identisch mit den herkömmlichen Kochverfahren der Bierwürze ist, unterzogen werden. Beispielsweise kann ein Kochen bei atmosphärischem Druck für 90 Minuten durchgeführt werden.

Zur Gärung kann die auf Anstelltemperatur abgekühlte und gut belüftete Buchweizenmalzwürze beispielsweise mit 10 bis 25 Mio. Hefezellen/ml bei Einsatz einer Weizenbierhefe oder mit 15 bis 30 Mio. Hefezellen/ml bei der Untergärung angestellt werden. Die Gärtemperaturen variieren bei der Obergärung zwischen 16 und 20 °C, vorzugsweise 17- 18°C. Der während der Gärung sich langsam aufbauende Spundungsdruck sollte am Ende der Hauptgärung ca. 2,5 barü betragen, wodurch im Fertiggetränk ein Kohlensäuregehalt von 0,5 bis 0,6 %, insbesondere 0,55 % erreicht wird. Die Untergärung wird günstiger weise bei einer tieferen Temperatur durchgeführt, beispielsweise bei 13 bis 15 °C. Der Spundungsdruck steigt langsam auf etwa 1,5 barü bis zum Ende der Gärung an, wodurch das Fertiggetränk mit einem Kohlensäuregehalt von 0,4 bis 0,6 %, vorzugsweise 0,5 %, erhalten wird. Die Gär- und Reifungszeit beträgt für die Obergärung 4 bis 6 Tage, vorzugsweise 5 Tage, für die Untergärung 5 bis 7 Tage, vorzugsweise 6 Tage.

In dem Verfahren gemäß der Erfindung kann die Fermentation auch unter Verwendung eines Lactobacillus-Stammes durchgeführt werden.

Das aus den Gärtanks in Lagertanks transferierte Buchweizengetränk wird 2 bis 6 Wochen bei -1 bis +4 °C unter CO2-Gegendruck gelagert, gegebenenfalls separiert zur Entfernung der Hefe und sodann auf Keg und/ oder Flasche abgefüllt. Das Buchweizen-Fertiggetränk ist dauerhaft trüb, ohne einen Bodensatz zu bilden.

Die Erfindung wird durch die folgenden Beispiele weiter erläutert.

### Beispiel 1

### Maischverfahren mit enzymatisch-thermischem Stärkeaufschluss mittels Glucoamylase

- Hauptguss: 3,2 - 4,2 hl Wasser / 100 kg Buchweizenmalzschrot,
- Einmaischtemperatur 45 - 55 °C, Zugabe von 300 - 500g Glucoamylase / 100 kg Buchweizenmalz und optional, falls erforderlich bei schlechter cytolytischer und proteolytischer Lösung des Buchweizenmalzes, Zugaben handelsüblicher Proteinase- und/oder Pentosanase- und/oder ß-Glucanase-Präparate.
- Rast bei Einmaischtemperatur: ≤ 30 Minuten,
- Aufheizen auf 62 - 68 °C und Halten der Temperatur je nach Malzlösung 10-30 Min.
- Aufheizen auf 70 - 78 °C. Während des Aufheizens, bei ca. 69 - 70 °C, dem Temperaturbereich einer sich schnell entwickelnden Verkleisterung der Stärke, Zugabe von 30 - 50 g α-Amylase / 100 kg Buchweizenmalz.
- Rast bis zur vollständigen Verflüssigung der Maische, in der Regel nach 15-30 Minuten.
- Aufheizen zum Kochen , Kochzeit ≥ 15 Minuten.
- Abkühlen der Maische z.B. durch Zugabe von Eis auf das vom α-Amylasepräparat vorgegebene Temperaturoptimum, oder mittels Kühlschlangen in der Maischepfanne oder Kühlrohren, die an der Behälteraußenwand angeschweißt sind.
- Zweite Dosage von 30 - 50 g α-Amylase/ 100 kg Buchweizenmalz.
- Rast bei der Optimaltemperatur des eingesetzten Enzyms bis zur vollständigen Verzuckerung (Jodnormalität) der Maische.
- Abmaischen bei 0 - 5°C über der Verzuckerungstemperatur.

### Beispiel 2

### Maischverfahren mit thermischem Stärkeaufschluss in einem Autoklav

- Hauptguss: 3,5 - 4,5 hl Wasser / 100 kg Buchweizenmalzschrot,
- Einmaischtemperatur 45 - 55 °C, Zugabe von 30 bis 50 g einer technischen a+ß- Amylase pro 100 kg Buchweizenmalz, optional Zugabe einer Proteinase und/oder einer Pentosanase und/oder ß-Glucanase.
- Rast bei Einmaischtemperatur: 15-45 Minuten.
- Aufheizen auf 62 - 65 °C und je nach Malzlösung 10 - 30 Minuten halten.
- Aufheizen auf 70 - 78 °C, Zugabe von 30 - 50 g α-Amylase / 100 kg BW-Malz während des Aufheizens. Halten der Temperatur bis zur vollständigen Verflüssigung der Maische.
- Aufheizen der Maische auf 105 - 115 °C entsprechend einem Druck von 0,4 bis 0,9 barü.
- Rast, je nach gewählter Temperatur: 5 - 30 Minuten.
- Abkühlen der Maische in zwei Schritten:
   1. Durch Druckentlastung auf atmosphärischen Druck, Temperatur: 98 -100 °C,
   2. durch Zugabe von Eis auf eine Temperatur von < 85 °C oder durch Kühlung mittels Kühlschlangen im oder an der Außenwand des Autoklaven bei Einsatz einer normalen, nicht hitzestabilen α-Amylase.
- Zweite Dosage von 30 - 50 g der α-Amylase / 100 kg BuchweizenMalz, der Zeitpunkt der Zugabe ist abhängig von der Optimaltemperatur des gewählten Enzympräparats.
- Rast bei der Optimaltemperatur bis zur vollständigen Verzuckerung der Maische.
- Abmaischen bei 0 - 5 °C über der Verzuckerungstemperatur.

## Patentansprüche

1. Verfahren zur Herstellung eines Getränks aus Buchweizen umfassend die Schritte
(i) Bereitstellen von Buchweizenmalz,
(ii) Maischen des Buchweizenmalzes unter Zugabe von Enzymen,
wobei ein enzymatisch-thermischer Stärkeaufschluss, bei dem eine Glucoamylase zugegeben wird, welche als Exoenzym 1,4-α-D-glycosidische Bindungen unter Bildung von Glucose hydrolysiert und zusätzlich 1,6-α-D-glycosidische Bindungen spaltet durchgeführt wird oder/und ein thermischer Stärkeaufschluss, bei dem eine thermostabile α-Amylase zugegeben wird, die als Endoenzym 1,4-α-D-glycosidische Bindungen spaltet und der thermische Stärkeaufschluss in einem Autoklav bei einer Temperatur von 105 °C bis 130 °C und einem Überdruck von 0,4 bis 0,9 barü durchgeführt wird,
wobei zum Maischen ein Malz eingesetzt wird, welches zu ≥ 99 Gew.-% aus Buchweizen besteht.

2. Verfahren nach Anspruch 1 zur Herstellung eines alkoholarmen Getränkes mit einem Alkoholgehalt von 1 bis 3 Vol.-%.

3. Verfahren nach einem der vorhergehenden Ansprüche zur Herstellung eines Getränkes, das trotz Einsatz eines Separators zur Abtrennung der Hefe dauerhaft trüb und ohne Bodensatzbildung bleibt.

4. Verfahren nach einem der vorhergehenden Ansprüche,
**dadurch gekennzeichnet,**
**dass** ein glutenfreies Getränk hergestellt wird.

5. Verfahren nach einem der vorhergehenden Ansprüche,
**dadurch gekennzeichnet,**
**dass** beim Maischen weiterhin eine α-Amylase zugesetzt wird.

6. Verfahren nach einem der vorhergehenden Ansprüche,
**dadurch gekennzeichnet,**
**dass** eine vollständige Verzuckerung der Stärke durchgeführt wird, wobei ein Anteil an nicht-vergärbaren Zuckern gebildet wird.

7. Verfahren nach einem der vorhergehenden Ansprüche, weiterhin umfassend einen Schritt
(iii) Fermentation, Reifung, Kaltlagerung, Hefeabtrennung durch Zentrifugation.

8. Verfahren nach Anspruch 7,
**dadurch gekennzeichnet,**
**dass** die Fermentation auch unter Verwendung eines Lactobacillus-Stammes durchgeführt wird.

9. Verfahren nach einem der vorhergehenden Ansprüche,
**dadurch gekennzeichnet,**
**dass** zur Herstellung des Getränks weiterhin Hefe eingesetzt wird.

10. Verfahren nach einem der vorhergehenden Ansprüche,
**dadurch gekennzeichnet,**
**dass** zur Herstellung des Getränks weiterhin Hopfen eingesetzt wird.

## Claims

1. Method for preparing a drink from buckwheat, comprising the following steps:
(i) providing buckwheat malt,
(ii) mashing the buckwheat malt while adding enzymes, wherein enzymatic-thermal starch decomposition is carried out, during which process glucoamylase, which hydrolyses 1.4-α-D glycosidic bonds as an exoenzyme, so as to form glucose, and also splits 1.6-α-D glycosidic bonds, is added, and/or wherein thermal starch decomposition is carried out, during which process a thermostable α-amylase, which breaks 1.4-α-D glycosidic bonds as an endoenzyme, is added, and the thermal starch decomposition is carried out in an autoclave at a temperature of from 105°C to 130°C and at a positive pressure of from 0.4 to 0.9 bar, wherein a malt consisting ≥ 99 wt.% buckwheat is used for the mashing process.

2. Method according to claim 1 for preparing a low-alcohol drink having an alcohol content of from 1 to 3 vol.%.

3. Method according to either of the preceding claims for preparing a drink that remains permanently cloudy and form of sediment-formation, despite the use of a separator for separating the yeast.

4. Method according to any of the preceding claims, **characterised in that** a gluten-free drink is prepared.

5. Method according to any of the preceding claims, **characterised in that** α-amylase is additionally added during the mashing process.

6. Method according to any of the preceding claims, **characterised in that** the starch is fully saccharified, a proportion of non-fermentable sugar being formed.

7. Method according to any of the preceding claims, further comprising a step of: (iii) fermentation, maturation, cold storage and yeast separation by means of centrifugation.

8. Method according to claim 7, **characterised in that** fermentation is also carried out using a strain of *lactobacillus.*

9. Method according to any of the preceding claims, **characterised in that** yeast is additionally used for preparing the drink.

10. Method according to any of the preceding claims, **characterised in that** hops are additionally used for preparing the drink.

## Revendications

1. Procédé de fabrication d'une boisson à partir de sarrasin, comprenant les étapes de
(i) fourniture de malt de sarrasin,
(ii) macération du malt de sarrasin en ajoutant des enzymes, où on effectue une extraction thermo-enzymatique de l'amidon, lors de laquelle on ajoute une glucoamylase, qui hydrolyse en tant qu'exoenzyme les liaisons 1,4-α-D-glycosidiques en formant du glucose et clive en outre les liaisons 1,6-α-D-glycosidiques et/ou une extraction thermique de l'amidon, lors de laquelle on ajoute une α-amylase thermostable, qui clive en tant qu'endoenzyme les liaisons 1,4-α-D-glycosidiques et où l'on effectue l'extraction thermique de l'amidon dans un autoclave à une température de 105 °C à 130 °C et une surpression de 0,4 à 0,9 bars,
dans lequel on utilise pour la macération un malt qui est constitué à ≥ 99 % en poids de sarrasin.

2. Procédé selon la revendication 1 pour la fabrication d'une boisson à faible teneur en alcool, avec une teneur en alcool de 1 à 3 % en volume.

3. Procédé selon l'une des revendications précédentes pour la fabrication d'une boisson qui reste durablement trouble et sans formation de dépôt malgré l'utilisation d'un séparateur pour séparer la levure.

4. Procédé selon l'une des revendications précédentes,
**caractérisé**
**en ce que** l'on fabrique une boisson sans gluten.

5. Procédé selon l'une des revendications précédentes,
**caractérisé**
**en ce que** l'on ajoute en outre une α-amylase lors de la macération.

6. Procédé selon l'une des revendications précédentes,
**caractérisé**
**en ce que** l'on effectue une saccharification complète de l'amidon, une proportion de sucres non fermentescibles étant formée.

7. Procédé selon l'une des revendications précédentes, comprenant en outre une étape de (iii) fermentation, maturation, stockage au froid, séparation de la levure par centrifugation.

8. Procédé selon la revendication 7,
**caractérisé**
**en ce que** la fermentation est réalisée en utilisant une souche de Lactobacillus.

9. Procédé selon l'une des revendications précédentes,
**caractérisé**
**en ce que** l'on met en oeuvre en outre de la levure pour la fabrication de la boisson.

10. Procédé selon l'une des revendications précédentes,
**caractérisé**
**en ce que** l'on met en oeuvre en outre du houblon pour la fabrication de la boisson.
